# EUROPEAN PATENT SPECIFICATION

(11) **EP 1 369 874 B1**
(45) Date of publication and mention of the grant of the patent: **25.10.2006**
(21) Application number: 03253483.6
(22) Date of filing: 03.06.2003
(51) Int. Cl.: G11B 33/10, G11B 27/34, G11B 27/36

(54) **Recording/reproducing apparatus**
Aufzeichnungs-/Wiedergabegerät
Appareil d'enregistrement / de reproduction

(30) Priority: 03.06.2002 JP 2002161413
(43) Date of publication of application: 10.12.2003
(73) Proprietor: ORION ELECTRIC CO., Ltd., Takefu-City, Fukui (JP)
(72) Inventor: Miyazaki, Hiroyuki, c/o Orion Electric Co., Ltd, Takefu-City, Fukui (JP)
(74) Representative: Nettleton, John Victor

(56) References cited:
- US-A- 5 986 992
- PATENT ABSTRACTS OF JAPAN vol. 2000, no. 02, 29 February 2000 (2000-02-29) -& JP 11 328937 A (SONY CORP), 30 November 1999 (1999-11-30)
- PATENT ABSTRACTS OF JAPAN vol. 2000, no. 21, 3 August 2001 (2001-08-03) -& JP 2001 101828 A (FUNAI ELECTRIC CO LTD), 13 April 2001 (2001-04-13)
- PATENT ABSTRACTS OF JAPAN vol. 1999, no. 04, 30 April 1999 (1999-04-30) -& JP 11 007757 A (FUJI PHOTO FILM CO LTD), 12 January 1999 (1999-01-12) & US 6 564 016 B1 (ITOH SHINJI ET AL) 13 May 2003 (2003-05-13)
- PATENT ABSTRACTS OF JAPAN vol. 0101, no. 40 (P-458), 23 May 1986 (1986-05-23) & JP 60 258787 A (MITSUBISHI DENKI KK), 20 December 1985 (1985-12-20)

## Description

### BACKGROUND OF THE INVENTION

### Field of the Invention:

The present invention relates to a recording/reproducing apparatus having a recording medium on which various types of information such as videos and audios are recorded as digital data, and especially relates to a recording/reproducing apparatus incorporated in a home digital electrical appliance such as a digital TV, a digital video disc recorder/player or the like.

### Prior Art:

For example, a recent recording/reproducing apparatus for recording and reproducing TV broadcasting programmes or video pictures uses disc-shaped recording medium such as hard disc, DVD and so forth as a random-access mass-storage means.

When a programme or a motion picture is recorded on a recording medium, digital data encoding video signals are stored and one video file is formed. Here, some video signals include audio signals and some other video signals do not include audio signals. The capacity of the recording medium is searched at the time of recording, and the current consumed capacity or the remaining capacity can be confirmed.

The above-described recording/reproducing apparatus is connected to a monitor, for example, a TV monitor for displaying reproduced video pictures. For confirming the remaining capacity, the power supply of a monitor is turned on, and a remote controller is operated so that a menu panel is displayed on the monitor and the panel is changed to the remaining capacity confirmation panel. Thus, the current consumed capacity is displayed on the monitor, thereby enabling a user to confirm a remaining capacity.

By confirming the remaining capacity, the user can confirm whether there exists the remaining capacity for recording a programme, so that the user can avoid such a mistake that recording is terminated in the middle of the programme. Furthermore, depending on the remaining capacity, the recording mode can be selected from: XP(High quality); SP(Standard); and LP(Long), and besides the capacity for recording can be adjusted by making an arrangement such as deletion or edit of a file.

For displaying the remaining capacity on the monitor, it is necessary to turn on the power supply of the monitor and to operate the remote controller to display the capacity on the monitor. Accordingly, it takes time and trouble to confirm the remaining capacity. When an urgent recording of a programme is required, recording is performed without confirming the remaining capacity for recording. As a result, it is likely that the programme is not recorded to its end.

In Japanese Patent Application laid open under No. 2001-307465, it is described that, when it is found that the monitored remaining capacity of the recording medium is less than a threshold, a notice to that effect is displayed on a screen. In Japanese Patent Application laid open under No. 5-28726, it is described that the remaining capacity on every recording performance is detected and displayed on a screen.

In these two prior art documents, an operation using a remote controller is not required. However, in the former case, the remaining capacity is displayed only when it becomes low, so that the user cannot confirm the remaining capacity constantly. Likewise, in the latter case, the remaining capacity is not always displayed on a screen. For example, the remaining capacity is not displayed when the power supply of the recording/reproducing apparatus is turned on, so that it is inconvenient to the user.

US-A-5 986 992 (cf. the preamble of claim 1) discloses a data storage cartridge having a display for displaying the storage capacity remaining on the cartridge. The display is driven by a controller and a power cell housed within the cartridge. Electrodes along an edge of the cartridge connect with electrodes within a data storage drive and information regarding the status of the cartridge is transferred to the controller. The controller and display are powered by a rechargeable cell. Current is provided to the electrodes to recharge the cell while the cartridge is in the data storage drive.

JP-A-11 328 937 discloses a signal recording device capable of displaying information regarding the residual quantity of a recording medium in the midst of recording the information by a variable bit rate. A moving image recording device is provided with a signal processor for performing signal processing to an inputted image signal, a data recording device having functions for recording the information of the image processed by the signal processor in a recording medium and monitoring the residual quantity of the recording medium, a display device having functions for calculating the remaining recording time into the recording medium and displaying the remaining recording time and a mode designating switch for outputting the control signal of designating the mode to the signal processor.

### SUMMARY OF THE INVENTION

It is therefore an object of the present invention to provide a recording/reproducing apparatus which can constantly confirm the remaining capacity of a recording medium without taking troubles.

In order to attain the above object, the present invention provides a recording/reproducing apparatus comprising a random access recording medium, a remaining capacity monitor means for monitoring the remaining capacity of the recording medium, a display for displaying the remaining capacity, and a control means for displaying the remaining capacity obtained from said remaining capacity monitor means on said display when the power supply is turned on, **characterized in that:**
the display comprises a plurality of LEDs, and
the control means calculates the ratio of the remaining capacity to the full capacity of the recording medium and drives the display to turn on a number of the LEDs depending on the obtained ratio.

Preferably, the control means controls the display so as to display the remaining capacity constantly and to renew the remaining capacity by obtaining a new remaining capacity from the remaining capacity monitor means at regular time intervals.

The remaining capacity monitor means monitors the remaining capacity of the recording medium constantly while operating. Accordingly, when the power supply is turned on, information of the remaining capacity is obtained from the remaining capacity monitor means, so that the remaining capacity is automatically displayed without any specific operation.

In case information of the remaining capacity is obtained periodically from the remaining capacity monitor means after the power supply is turned on, the information of the remaining capacity can be renewed without any specific operation, thereby making it possible to display the remaining capacity accurately.

### BRIEF DESCRIPTION OF THE DRAWINGS

Fig. 1 is a schematic block diagram showing one embodiment of a recording/reproducing apparatus according to the present invention;
Fig. 2 is a view showing a front panel of the recording/reproducing apparatus;
Fig. 3 is a flowchart with respect to an indication of a remaining capacity at the time of power-on; and

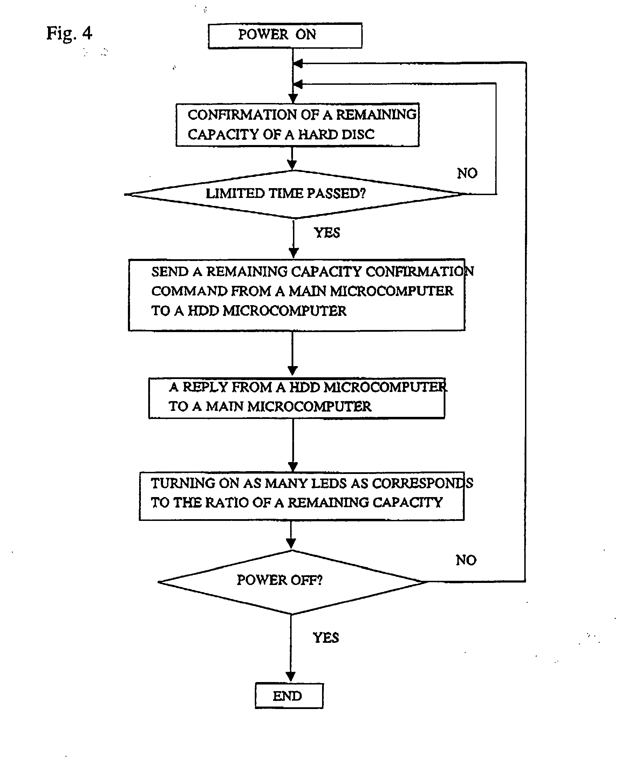

Fig. 4 is a flowchart with respect to an indication of a remaining capacity after power-on.

### DETAILED DESCRIPTION OF THE PREFERRED EMBODIMENTS

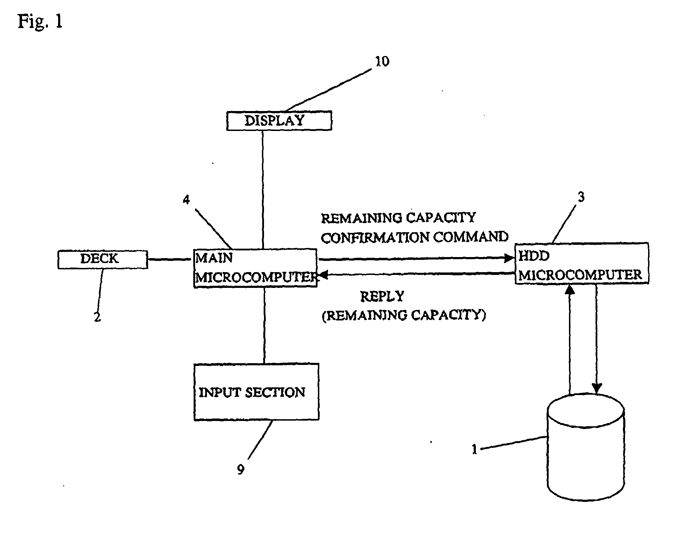

One embodiment of a recording/reproducing apparatus according to the present invention is shown in Fig. 1. The recording/reproducing apparatus is provided with a hard disc 1 as a recording medium and a video cassette tape deck 2. The hard disc 1 is driven and controlled by a HDD microcomputer (hard disc microcomputer) 3 to record and reproduce digital data. The deck 2 is driven and controlled by a main microcomputer 4 to record and reproduce analog data. The main microcomputer 4 also controls the recording/reproducing apparatus in its entirety.

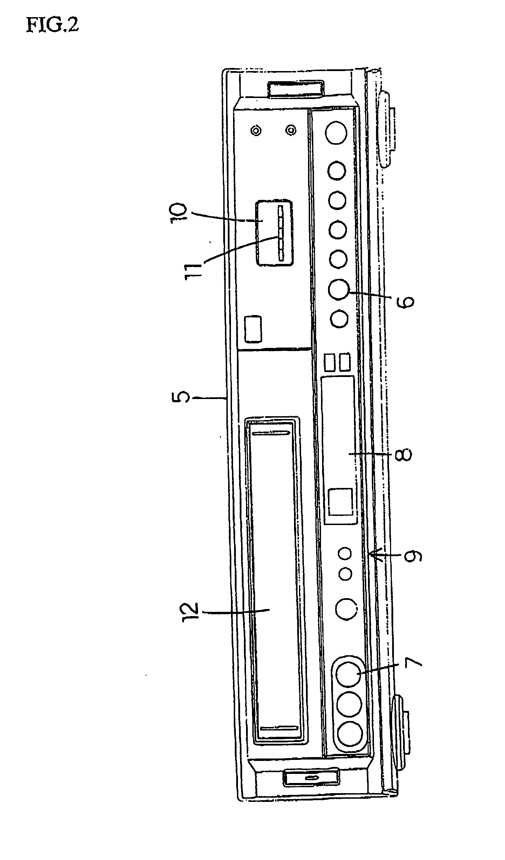

As shown in Fig. 2, a front panel 5 of the recording/reproducing apparatus is provided with an input section 9 having a plurality of keys 6, an input terminal 7 and a display window 8, and further provided with a display 10 for displaying the remaining capacity of the hard disc 1. The display 10 is provided with a plurality of LEDs 11 aligned in a row, 5 LEDs in this case. A numeral 12 in the drawing represents a loading slot for a video cassette tape.

Video signals from a tuner or video signals inputted from externals are converted to digital signals, and the thus obtained digital data are written in the hard disc 1 with a given capacity of file formed therein. The HDD microcomputer 3 constantly searches, while the power supply is turned on, the consumed capacity out of the full capacity of the hard disc 1 regardless whether the hard disc 1 is recording or reproducing, thereby recognizing the remaining capacity of the hard disc 1. Namely, the HDD microcomputer 3 has a monitor function for monitoring the remaining capacity of the hard disc 1.

The main microcomputer 4 obtains information of the remaining capacity of the hard disc 1 from the HDD microcomputer 3 at the time of power-on and after power-on, and drives the display 10 for displaying the remaining capacity of the moment.

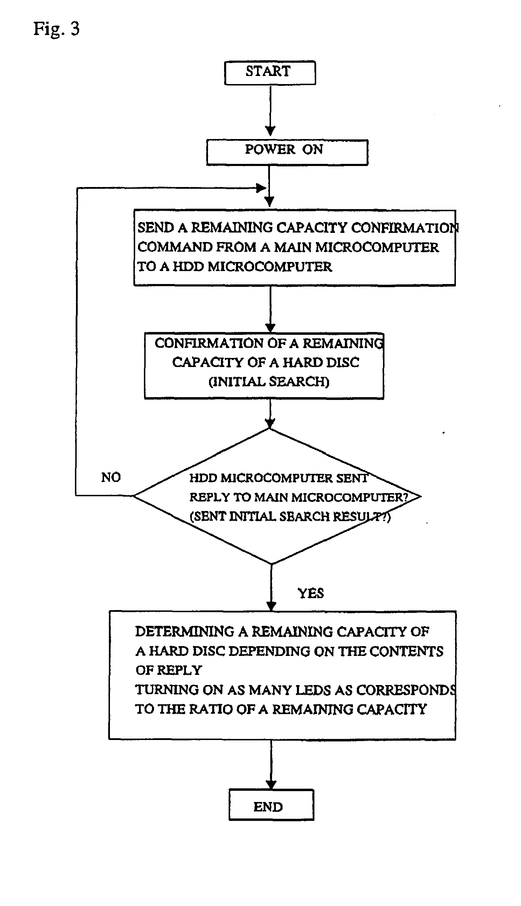

Namely, as shown in Fig. 3, when the power supply is turned on, the main microcomputer 4 transmits the remaining capacity confirmation command to the HDD microcomputer 3. The HDD microcomputer 3 has access to the hard disc 1 and starts an initial search for confirming the remaining capacity of the moment. When the HDD microcomputer 3 confirms the remaining capacity by checking the consumed capacity of the hard disc 1, the HDD microcomputer 3 sends a reply with an initial search result to the main microcomputer 4.

When there is no reply from the HDD microcomputer 3 within a predetermined time, it means that there occurred some errors such as troubles in a recorded file or the like and an initial search jammed. When no reply is reached after a predetermined time, the main microcomputer 4 transmits the remaining capacity confirmation command to the HDD microcomputer 3 once again. The HDD microcomputer 3 checks, while repairing a file in trouble, the consumed capacity, and sends back a search result to the main microcomputer 4. The main microcomputer 4, after receiving an initial search result, determines the non-consumed capacity, i.e., the remaining capacity, of the hard disc 1. By calculating the ratio of the remaining capacity to the full capacity, the main microcomputer 4 drives the display 10 to turn on the LEDs 11 depending on the obtained ratio.

The display 10 indicates 5-level capacity using five LEDs. Namely, when 1/5 (20%) out of the full capacity of the hard disc 1 is consumed, one LED is turned on. When four LEDs are turned on, the user can see that the consumed capacity is 4/5 (80%) out of the full capacity of the hard disc 1 and the remaining capacity of the hard disc 1 is 1/5 (20%). When there exists no remaining capacity, all LEDs are turned on or the emitting colour of the LEDs 11 may be changed to another colour in order to draw the user's attention.

Thus, when the power supply is turned on, the remaining capacity can be displayed as the ratio to the full capacity of the hard disc 1 and the user can confirm the remaining capacity at a glance. The full capacity of the hard disc 1 is limited, and recording time varies depending on the recording mode. Thus, the remaining recording time varies. However, by displaying the remaining capacity using a ratio, a user can obtain a rough standard regardless of the recording time.

While the recording/reproducing apparatus is used after the power supply is turned on, digital data is written into or deleted from the hard disc 1, so that the consumed capacity varies. The HDD microcomputer 3 monitors constantly the operation of the hard disc 1 to check the consumed capacity and confirms the remaining capacity of the moment. The main microcomputer 4 transmits, while the power supply is turned on, a remaining capacity confirmation command to the HDD microcomputer 3 at regular time intervals.

When it receives such a command, the HDD microcomputer 3 sends back the consumed capacity of the hard disc 1 of the moment to the main microcomputer 4. The main microcomputer 4 can obtain the latest remaining capacity, and the LEDs 11 of the display 10 are turned on in compliance with the remaining ratio in the manner as described above. Such an operation is repeated until the power supply is turned off.

A user can confirm the remaining capacity of the hard disc 1 at any time by renewing the information of remaining capacity periodically while the power supply is turned on. Accordingly, when a recording reservation is made, there is no need to take any specific steps for confirming the remaining capacity, and the usability of the apparatus is improved.

While description has been made of preferred embodiments of the invention, it will be obvious to those skilled in the art that various changes and modifications may be made within the scope of the claims. For example, instead of a hard disc, rewritable DVD, CD, and a semiconductor memory are applicable as a recording medium. A recording/reproducing apparatus employing such a recording medium may be a home digital electrical appliance such as a TV, a video tape recording/reproducing player, an audio appliance, an electric oven, a refrigerator, a printer or the like, which processes digital data.

The display may be constituted of a bar gauge, indicating the ratio of a remaining capacity to the full capacity. The remaining capacity can be displayed in more detail by increasing the number of LEDs. The emitting colour of LED may be changed depending on the remaining capacity.

As explained heretofore, according to the present invention, as far as the power supply is turned on, the remaining capacity of a recording medium such as a hard disc can be displayed automatically. Therefore, there is no need to turn on the power supply of a TV monitor or to take any specific steps for confirming a remaining capacity. Thus, even when it is urgently necessary to record a programme or the like, the remaining capacity can be confirmed at once. Accordingly, it is possible to decide whether to record on the recording medium in compliance with the remaining capacity or to record on another recording medium. Thus, the user can avoid making such a mistake that recording is terminated in the middle of the programme.

## Claims

1. A recording/reproducing apparatus comprising a random access recording medium (1), a remaining capacity monitor means (3) for monitoring the remaining capacity of the recording medium (1), a display (10) for displaying the remaining capacity, and a control means (4) for displaying the remaining capacity obtained from said remaining capacity monitor means on said display when the power supply is turned on, **characterized in that**:
the display (10) comprises a plurality of LEDs (11), and
the control means (4) calculates the ratio of the remaining capacity to the full capacity of the recording medium (1) and drives the display (10) to turn on a number of the LEDs (11) depending on the obtained ratio.

2. A recording/reproducing apparatus as claimed in claim 1, wherein the LED emitting colour is changed depending on the remaining capacity.

3. A recording/reproducing apparatus as claimed in claim 2, wherein when no remaining capacity remains, the emission colour of the LEDs (11) is changed to a different colour to draw the user's attention.

4. A recording/reproducing apparatus as claimed in any preceding claim, wherein the apparatus has a front panel (5) provided with an input section (9) having a plurality of keys (6), an input terminal (7) and a display window (8).

5. A recording/reproducing apparatus as claimed in any preceding claim, wherein said control means (4) controls said display (10) so as to display the remaining capacity constantly after the power supply is turned on and to renew said remaining capacity by obtaining a new remaining capacity from said remaining capacity monitor means (3) at regular time intervals.

## Patentansprüche

1. Aufzeichnungs-/Wiedergabevorrichtung, mit einem Aufzeichnungsmedium (1) mit wahlfreiem Zugriff, Restkapazität-Überwachungsmitteln (3) zum Überwachen der Restkapazität des Aufzeichnungsmediums (1), einer Anzeige (10) zum Anzeigen der Restkapazität und einem Steuermittel (4) zum Anzeigen der von den Restkapazität-Überwachungsmitteln erhaltenen Restkapazität auf der Anzeige, wenn die Leistungsversorgung eingeschaltet wird, **dadurch gekennzeichnet, dass**:
die Anzeige (10) mehrere LEDs (11) umfasst und
das Steuermittel (4) das Verhältnis der Restkapazität zur Gesamtkapazität des Aufzeichnungsmediums (1) berechnet und die Anzeige (10) ansteuert, damit sie in Abhängigkeit von dem erhaltenen Verhältnis eine bestimmte Anzahl der LEDs (11) einschaltet.

2. Aufzeichnungs-/Wiedergabevorrichtung nach Anspruch 1, bei der die LED-Emissionsfarbe in Abhängigkeit von der Restkapazität geändert wird.

3. Aufzeichnungs-/Wiedergabevorrichtung nach Anspruch 2, bei der die Emissionsfarbe der LEDs (11) dann, wenn keine Restkapazität zurückbleibt, zu einer anderen Farbe geändert wird, um die Aufmerksamkeit des Anwenders darauf zu lenken.

4. Aufzeichnungs-/Wiedergabevorrichtung nach einem vorhergehenden Anspruch, wobei die Vorrichtung eine Frontkonsole (5) besitzt, die mit einem Eingabeabschnitt (9) mit mehreren Tasten (6), einem Eingangsanschluss (7) und einem Anzeigefenster (8) versehen ist.

5. Aufzeichnungs-/Wiedergabevorrichtung nach einem vorhergehenden Anspruch, bei der das Steuermittel (4) die Anzeige (10) so steuert, dass sie die Restkapazität konstant anzeigt, nachdem die Leistungsversorgung eingeschaltet worden ist, und die Restkapazität in regelmäßigen Zeitintervallen aktualisiert, indem sie eine neue Restkapazität von den Restkapazität-Überwachungsmitteln (3) erhält.

## Revendications

1. Un appareil d'enregistrement/reproduction, comprenant un support d'enregistrement à accès aléatoire (1), des moyens de surveillance de la capacité restante (3) pour surveiller la capacité restante du support d'enregistrement (1), un affichage (10) pour afficher la capacité restante, et des moyens de commande (4) pour afficher la capacité restante obtenue des moyens de surveillance de capacité restante sur ledit affichage, lorsque l'alimentation en puissance est mise en service, **caractérisée en ce que**:
- l'affichage (10) comprend une pluralité de diodes électroluminescentes (11), et
- les moyens de commande (4) calculent le rapport entre la capacité restante et la pleine capacité du support d'enregistrement (1), et commandent l'affichage (10) pour mettre en service un certain nombre des diodes électroluminescentes (11), selon le rapport obtenu.

2. Un appareil d'enregistrement/reproduction tel que revendiqué à la revendication 1, dans lequel la couleur d'émission par diode électroluminescente est modifiée selon la capacité restante.

3. Un appareil d'enregistrement/reproduction tel que revendiqué à la revendication 2, dans lequel, lorsqu'il ne subsiste aucune capacité restante, la couleur d'émission des diodes électroluminescentes (11) est modifiée pour une couleur différente, pour attirer l'attention de l'utilisateur.

4. Un appareil d'enregistrement/reproduction tel que revendiqué à l'une quelconque des revendications précédentes, dans lequel l'appareil comprend un panneau avant (5) muni d'une section d'entrée (9) comprenant une pluralité de touches (6), une borne d'entrée (7) et une fenêtre d'affichage (8).

5. Un appareil d'enregistrement/reproduction tel que revendiqué à l'une quelconque des revendications précédentes, dans lequel lesdits moyens de commande (4) commandent ledit affichage (10) pour afficher la capacité restante en permanence après la mise en service de l'alimentation de puissance, et pour renouveler ladite capacité restante, par obtention d'une nouvelle capacité restante depuis lesdits moyens de surveillance de capacité restante (3), à des intervalles de temps réguliers.
